(19) Europäisches Patentamt / European Patent Office / Office européen des brevets

(11) **EP 4 171 064 B1**

(12) **EUROPEAN PATENT SPECIFICATION**

(45) Date of publication and mention
of the grant of the patent:
**17.09.2025 Bulletin 2025/38**

(21) Application number: **21204004.2**

(22) Date of filing: **21.10.2021**

(51) International Patent Classification (IPC):
**H04R 3/00** (2006.01)    **G10L 25/30** (2013.01)
**G01S 3/801** (2006.01)

(52) Cooperative Patent Classification (CPC):
**H04R 3/005; G01S 3/801; G10L 21/0208;
G10L 25/30;** H04R 2201/40; H04R 2430/20

(54) **SPATIAL DEPENDENT FEATURE EXTRACTION IN NEURAL NETWORK BASED AUDIO PROCESSING**

EXTRAKTION RÄUMLICH ABHÄNGIGER MERKMALE IN EINER AUF NEURONALEM NETZ BASIERENDEN AUDIOVERARBEITUNG

EXTRACTION DE CARACTÉRISTIQUES EN FONCTION DE L'ESPACE DANS UN TRAITEMENT AUDIO BASÉ SUR UN RÉSEAU DE NEURONES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**26.04.2023 Bulletin 2023/17**

(73) Proprietor: **Goodix Technology (HK) Company
Limited
Sheung Shui (HK)**

(72) Inventors:
• **BOHLENDER, Alexander**
  **9000 Ghent (BE)**
• **MADHU, Nilesh**
  **3001 Leuven (BE)**
• **SPRIET, Ann Elvire F.**
  **3000 Leuven (BE)**
• **TIRRY, Wouter Joos**
  **3000 Leuven (BE)**

(74) Representative: **Nederlandsch Octrooibureau
P.O. Box 29720
2502 LS The Hague (NL)**

(56) References cited:
• **CHAKRABARTY SOUMITRO ET AL: "Time-Frequency Masking Based Online Multi-Channel Speech Enhancement With Convolutional Recurrent Neural Networks", IEEE JOURNAL OF SELECTED TOPICS IN SIGNAL PROCESSING, IEEE, US, vol. 13, no. 4, 1 August 2019 (2019-08-01), pages 787 - 799, XP011736182, ISSN: 1932-4553, [retrieved on 20190723], DOI: 10.1109/JSTSP.2019.2911401**
• **CHAKRABARTY SOUMITRO ET AL: "Time-Frequency Masking Based Online Speech Enhancement with Multi-Channel Data Using Convolutional Neural Networks", 2018 16TH INTERNATIONAL WORKSHOP ON ACOUSTIC SIGNAL ENHANCEMENT (IWAENC), IEEE, 17 September 2018 (2018-09-17), pages 476 - 480, XP033439027, DOI: 10.1109/ IWAENC.2018.8521346**

## Description

### Field of the invention

The present invention relates to a neural network based audio processing system configured to estimate or detect signals produced by sound sources located within a defined, contiguous, spatial region by using spatial dependent feature extraction techniques, to a method for estimating or detecting signals produced by sound sources located within a defined, contiguous, spatial region by using spatial dependent feature extraction techniques, and to a program for being executed by a processor and comprising instructions implementing the method.

### Background art

Audio extraction problems are conventionally addressed using techniques such as single microphone stationary noise suppression or multi-microphone setups for removing undesired signals from a target signal. The extracted desired signal is used for speech enhancement, speech recognition, audio transcription, and many other audio-based applications.

Signals that exhibit a high degree of sparsity in the short-time Fourier transform (STFT) domain, such as speech or music, can be separated efficiently with the help of time-frequency (TF) masks that identify STFT bins in which the target signal is dominant. To acquire such masks, deep learning approaches are commonly employed. TF masks is a known tool in audio processing for speech enhancement and localization which allows for supervised learning. TF masks comprise information about the activity of a target source for each time and frequency in the short-time Fourier transform (STFT) domain. Typically, each element of the TF mask is a number between 0 and 1. TF masks can also be complex numbers. The TF mask can be used to recover the corresponding clean source signal of the target source, e.g., by elementwise multiplication of the mask and the reference microphone signal, followed by an inverse transformation. As explained, TF masks identify short-time Fourier transform (STFT) bins dominated by the signal of interest and can be obtained by exploiting spectro-temporal correlations and spatial information. Deep learning approaches are used to take advantage of this. Instead of estimating TF masks, other known approaches are to estimate STFT bins of the signal(s) of interest, to estimate the time-domain signal(s) of interest or to estimate multi-channel beamformer weights that are applied to the multi-channel microphone recordings.

To apply a deep neural network (DNN) for this task, the selection of the discriminatory features based on which the target component can be identified is a key aspect. For single microphone captures, it is possible to separate, e.g., speech and background noise, by exploiting the typical structure in the spectro-temporal characteristics of speech. Such methods fail, however, when the target and the interferer are of the same kind (e.g., separating two different speakers). When multiple microphone captures are available, spatial information can be additionally exploited to distinguish between sources with similar spectro-temporal properties.

No matter which information is used, a clear definition of the target component is crucial, so that the DNN can learn to correctly suppress the unwanted components while preserving the target. For the separation of speech from background noise, for example, the distinction can be made based on spectro-temporal (speech / non-speech) and/or spatial (localized / diffuse) signal properties. These discriminating properties can be incorporated already during the training of the neural network.

For the separation of multiple localized sound sources, the distinction can be made based on the locations of the sources, which may be described, e.g., in terms of the corresponding directions of arrival (DOAs). However, since either of the sources (e.g., one out of multiple talkers speaking at the same time) can be considered the target, user input is required to resolve this ambiguity in target look directions. A usual approach is to train the network to extract signal components from all directions. A desired signal can then be obtained by selecting one or a combination of many output streams (e.g., all streams in the target beam). In this approach, an optimal result for all output streams without a-priori knowledge of the relevance of each stream is produced and, subsequently, only a small fraction of these streams is used to reconstruct the target signals, i.e., the DNN outputs contain a large amount of redundancy. Thus, this approach does not allow an efficient use of the available computational resources. Another approach would be to train the neural network for a fixed, a-priori known spatial angle. However, this approach does not allow to select the angle or spatial at run-time and hence, is not flexible. Typically also a single angle is considered.

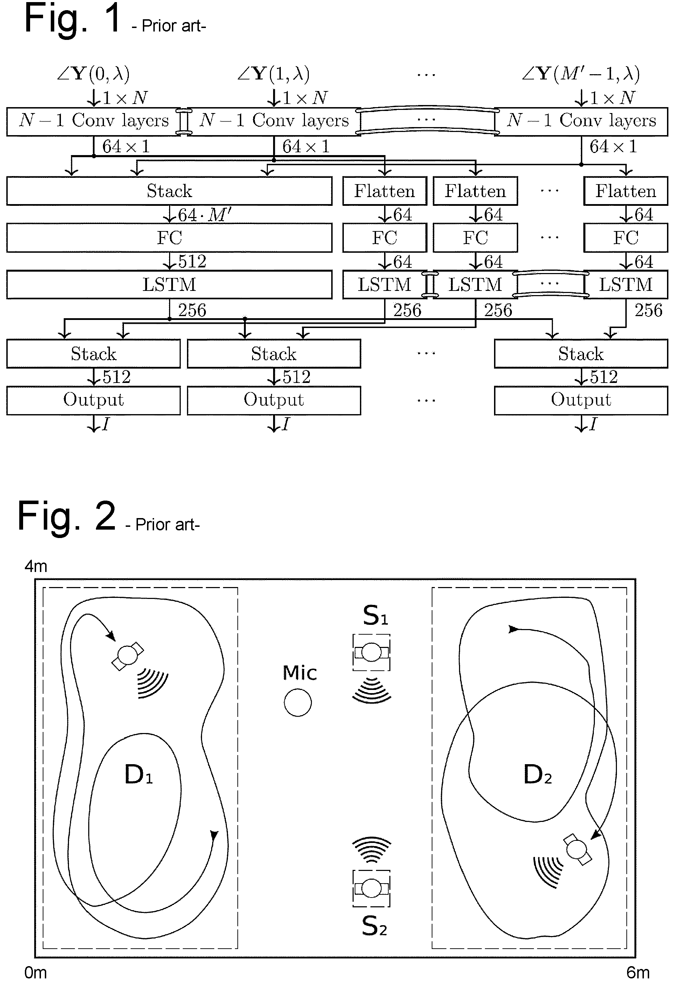

"Neural Networks Using Full-Band and Subband Spatial Features for Mask Based Source Separation" by A. Bohlender, A. Spriet, W. Tirry, and N. Madhu. in Proc. European Signal Processing Conference (EUSIPCO) 2021 discloses estimating TF masks using a deep neural network architecture (consisting of convolutional (CNN) as well as recurrent layers) as the one shown in figure 1. The input of the CNN shown in figure 1 consists of the phase spectrogram of N microphone signals. Since the masks are estimated simultaneously for all directions of arrival (DOAs), for a discrete grid with a total of $I$ DOAs, the output size for each TF bin is equal to $I$. Thus, each of the returned $I$ TF masks corresponds to one particular direction. For extracting a single target only the masks corresponding to the target source DOA(s) are required and all other estimated masks are discarded. Thereby, the computational power of the approach is not used efficiently as TF masks that will not be used are calculated. Furthermore, the performance may be suboptimal since a minimum performance needs to be achieved for all angles at once.

"Time-Frequency Masking Based Online Multi-Channel Speech Enhancement with Convolutional Recurrent Neural Networks", by S. Chakrabarty and E. A. P. Habets, in IEEE Journal of Selected Topics in Signal Processing, vol. 13, no. 4, pp. 787-799, Aug. 2019, DOI: 10.1109/JSTSP.2019.2911401, discloses a similar CNN architecture for mask estimation as the one shown in figure 1. However, only a single TF mask is returned since this approach only considers the separation of a single, localized speech source from diffuse and uncorrelated background noise. In this case it suffices to distinguish only between localized and non-localized signal components, and the specific location of the target source does not play a role. This approach, however, is not suitable for separating multiple localized sources.

"Eigenvector-Based Speech Mask Estimation for Multi-Channel Speech Enhancement", by L. Pfeifenberger, M. Zöhrer and F. Pernkopf, in IEEE/ACM Transactions on Audio, Speech, and Language Processing, vol. 27, no. 12, pp. 2162-2172, Dec. 2019, DOI: 10.1109/TASLP.2019.2941592 discloses using a neural network architecture for TF mask estimation wherein the output of the neural network consists of a total of three masks that correspond to the target source, the interfering sources and the background noise, respectively. The ambiguity as to which source is considered the target is resolved by training the network for clearly defined scenarios. An example of one possible training scenario is shown in figure 2, wherein the location of the one source is confined to a specific area D1, whereas the location of the other source is confined to a different area D2. However, this approach lacks in versatility, since the target DOA range must be specified in advance and cannot be controlled by the user after training the neural network as it makes assumptions about the location and the movement of the sources to clearly define which source is the target, and which is the interferer.

"Distant speech separation using predicted time-frequency masks from spatial features", by P. Pertilä and J. Nikunen, in: Speech Communication 68 (2015), pp. 97-106 discloses an approach wherein the problem of separating multiple sources based on their DOAs is considered specifically. A simple feedforward neural network is employed. The input features are based on the phase spectrogram of the microphone signals, as well as the DOAs. To obtain a representation of the DOAs that is suitable for being used along with the microphone signal phases, the "theoretical" interchannel phase differences that would result from ideal plane wave propagation along the specified DOA are first computed. As input to the neural network, a score (per TF bin) is then determined for the look direction as well as the non-look directions. By averaging or otherwise aggregating the input scores for several directions, the approach could be extended to permit a target range of DOAs being specified instead. Alternatively, the aggregation could be based on the independently obtained outputs for several DOAs. The latter is, however, not efficient due to their computational complexity whereas the former approach is suboptimal as the neural network will have to reach a compromise in order to offer a suitable performance for all possible spatial angles of interest.

"Multi-Channel Overlapped Speech Recognition with Location Guided Speech Extraction Network", by Z. Chen, X. Xiao, T. Yoshioka, H. Erdogan, J. Li and Y. Gong, 2018 IEEE Spoken Language Technology Workshop (SLT), 2018, pp. 558-565, DOI: 10.1109/SLT.2018.8639593, and "Temporal-Spatial Neural Filter: Direction Informed End-to-End Multi-channel Target Speech Separation", by R. Gu, & Y. Zou, arXiv preprint arXiv:2001.00391, 2020, also disclose incorporating the definition of the target into the input features, thereby lacking versatility and having reduced efficiency. Three different types of input features are used. Namely spatial features (interchannel phase differences), spectral features (beamformed microphone signals), and the so-called angle feature (cosine distance between microphone signal spectra and steering vector), two of which are (in part) based on the target speaker location. The look direction is incorporated into the spectral as well as the angle feature in order to define the target. The so-called angle feature is a score which quantifies how well the microphone signals correspond to the specified look direction. In addition, a beamformer is steered in the target direction in order to obtain spectral features that are specific to this direction. Thus, these approaches are also computationally complex. Also, as it has to be applicable to a user-defined angle, performance on the user-defined angle needs to be compromised to achieve decent performance for all considered angles.

## Summary of the invention

The invention provides a computer-implemented method, a computer program and an apparatus as disclosed in the claims.

In a first aspect, the invention provides a method for detecting or estimating target sound sources among a plurality of sound sources wherein the target sound sources are located in at least one target spatial region among a plurality of spatial regions, the method is defined in independent claim 1.

The another plurality of features may be generated based on both the features corresponding to the target spatial region and features corresponding to other non-target spatial region. The target sound sources may be all of them located in a single target spatial region or may be spread over several spatial target regions. The neural network may have been previously trained for each of the plurality of spatial regions. The neural network may comprise a spatial region dependent layer for each of the plurality of spatial regions and the spatial region dependent layers of the neural network may be trained for each spatial region. The at least one target spatial region may be set at run-time by a user via a user interface or in any other suitable way. Alternatively, several target spatial regions may be set at run time. The plurality of spatial regions for which the spatial dependent layers are trained may cover a broader space than the one covered by the target spatial region. Indeed, the plurality of spatial regions may cover all possible spatial regions that can be set by the user. As an example, the plurality of spatial regions may correspond to a grid of DOA regions covering 0-360 degrees such that, e.g., the plurality of spatial regions comprise a first spatial region covering a region comprising angles from 0 to 10 degrees, a second spatial region covering a region comprising angles from 10 to 20 degrees, a third spatial region covering a region comprising angles from 20 to 30 degrees and so on.

The plurality of spatial regions may comprise a plurality of direction of arrivals. Alternatively, the spatial regions may comprise three dimensional volumes. For instance, The three dimensional volume may be defined as a plurality of points wherein each point is defined by a set of three dimensional coordinates in the cartesian, cilindrical or spherical coordinate system.

In an embodiment of the invention, the plurality of input signals to the neural network may comprise a plurality of phases of the time-frequency representations of the microphone signals, and/or a plurality of normalized amplitudes of time-frequency representations of microphone time-domain signals wherein the normalization is based on a norm of at least one of a plurality of time-frequency representations of microphone time-domain signals and/or a plurality of complex time-frequency representations of the microphone signals.

In another embodiment of the invention, the plurality of features are extracted from the plurality of signals by means of at least one of a plurality of convolutional neural network layers.

In the invention, the method comprises estimating, by the processor, a time-frequency, TF, mask based on the another plurality of features and to detect or estimate the at least one sound source among the target sound sources in the at least one target spatial region based on the TF mask. This TF mask may have a complex or a real value. The TF mask may be applied to a single channel or to multiple channels.

In another embodiment of the invention, the method may comprise estimating, by the processor, a time domain representation of the at least one sound source based on the another plurality of features and to detect or estimate the at least one sound source based on the time domain representation.

The method further comprises estimating, by the processor, a time-frequency representation of the at least one sound source based on the another plurality of features and to detect or estimate the at least one sound source based on the time-frequency representation.

In another embodiment, the method may comprise estimating, by the processor, beamforming weights (e.g., multi-channel complex masks or time-domain filter coefficients) based on the another plurality of features and to detect or estimate the at least one sound source based on the beamforming weights. The beamforming weights may be applied to the multichannel signals.

The another plurality of features are generated based on a weighted combination of the extracted plurality of features. I.e., each of the another plurality of features may be obtained based on any suitable linear combination of the extracted plurality of features.

In another embodiment, the another plurality of features may be generated by weighting the extracted plurality of features and taking the maximum of the weighted extracted plurality of features.

In another embodiment, the weighted combination may be based on an average value among values of the extracted plurality of features corresponding to the at least one target region. I.e., the another plurality of features may be obtained by calculating the average value among all the values of the extracted plurality of features that correspond to the at least one target region.

Another aspect of the invention relates to an apparatus for detecting or estimating target sound sources among a plurality of sound sources wherein the target sound sources are located in at least one target spatial region among a plurality of spatial regions, the apparatus comprising a memory and a processor communicatively connected to the memory and configured to execute instructions to perform the method described above.

A further aspect of the invention relates to a computer program which is arranged to perform the method described above.

By providing a spatial, for instance DOA, dependent feature extraction and user-controllable spatial (e.g., DOA) selection that can be integrated into a DNN or neural network, neither the input nor the output of the DNN need to be changed to accommodate the spatial (e.g. DOA) dependence.

By providing a target region range (at run-time), which may be defined by a set of target DOAs or spatial regions, to define the target sources, versatility and scalability is provided while still allowing separation of multiple localized sources.

Furthermore, the location of the target source does not need to be defined in advance while still avoiding training a separate DNN for every possible scenario, thereby providing flexibility while saving resources.

In the invention only one mask may be estimated for all target components, rather than one mask for each of $I$ DOAs or spatial related features, thereby providing an efficient use of computational and memory resources. In addition since the last neural network layers only need to focus on a single spatial region, improved performance is expected. Note that the invention is not limited to mask estimation. Instead of predicting a mask, the network may estimate a time-domain or time-frequency domain representation of the target signals which is however not according to the invention. Alternatively and not according to the invention, the network may estimate beamformer coefficients.

The invention allows the DNN to learn on its own how to process each part of the input data depending on the specified spatial regions or DOAs. With this approach, spatial or DOA information is inherently combined with other types of information without the need for hand crafted features.

The claimed invention performs dimensionality reduction (e.g., by means of an elementwise maximum operation) within the neural network. Consequently, the DNN has more control over the information to be discarded.

The claimed invention also allows to incorporate information for a range of spatial regions or DOAs, thereby permitting a better exploitation of the available information. This will lead to improved source quality and better noise and interference suppression.

With the claimed spatial region dependent feature extraction, the neural network can learn on its own how any kind of input features can be combined with the spatial region information.

It should be evident that other approaches are available and known for the person skilled in the art.

**Brief description of the drawings**

The present invention will be discussed in more detail below, with reference to the attached drawings, in which:

Fig. 1 schematically shows an audio processing system based on a neural network according to the prior art.
Fig 2 schematically shows a training scenario for a neural network based audio processing system according to the prior art.
Fig. 3 schematically shows another audio processing system based on a neural network according to the prior art.
Fig. 4A schematically shows an audio processing system based on a neural network according to a first embodiment of the present invention.
Fig. 4B shows an example of the spatial regions and the target spatial region according to an embodiment of the present invention.
Fig. 5 schematically shows an audio processing system based on a neural network according to a second embodiment of the present invention.
Figs. 6A-B shows simulation results of signal estimation performed using a prior art method and a method according to an embodiment of the present invention.
Fig. 7 shows a flow chart of a method for processing audio in an audio processing system based on a neural network according to an embodiment of the present invention.

The figures are meant for illustrative purposes only, and do not serve as restriction of the scope or the protection as laid down by the claims.

**Description of embodiments**

The invention can be used in any multi-microphone system for estimation and/or detection of signals produced by sound sources located within a defined, contiguous, spatial target region. In case of enhancement this means suppression of all sources outside of the specified target region, as well as the suppression of non-localized background noise. One application could be, for example, the extraction of a single target source, whose location may be acquired using a source localization algorithm. The size of the target region can be adjusted to control the uncertainty regarding the location. Another application of the invention is to allow for the spatial audio capture where the size of the target region is adapted/controlled by the application (e.g., acoustic zoom). Alternatively, e.g., in monitoring applications, the invention can be used to detect a particular sound source located in a spatial region of interest. Therefore, the invention can be applied to perform audio enhancement, source separation as well as source activity detection of particular sounds from a certain direction. Other applications of the invention are possible.

In the invention, a target spatial range is specified at run-time. This can be incorporated in the neural network as a set of additional input parameters, thereby defining clearly the region from which sources should be extracted.

Here it is of particular interest that the spatial region of interest can be determined at run-time. To achieve this, it is proposed to perform a spatial range-dependent feature extraction, where the first layer(s) of the DNN uses weights that are dependent on the specified target spatial range. Without loss of generality, we shall consider the spatial range to be represented by the directions of arrival (DOA) in the following. This does not, however, limit the scope of the invention to only DOA-based target range specification. For example, instead of using spatial regions represented by directions of arrival, three dimensional (3D) volumes in space represented by a plurality of points wherein each point is defined in terms of cartesian, spherical or cilindrical coordinates could be used. Thus, although through the description reference may be made to spatial regions comprising DOAs, all the described embodiments may alternatively be implemented by using any other kind of suitable spatial region, such as for instance 3D volumes.

Thus, a target DOA range is specified and all sound sources that lie within the target DOA range will be considered as target sources and all sound sources that lie outside of the target DOA range will be considered as interference sources. For the resulting source separation problem, a DOA dependent feature extraction and user-controllable DOA selection will be used that can be integrated into a DNN. In this way, neither the input nor the output of the DNN need to be changed to accommodate the DOA dependence. In this way, the input does not need to comprise features that contain the target DOA range information (such as the theoretical interchannel phase differences) which are combined (e.g., by concatenation along one dimension or by computing a score) with other features (i.e., the information based on which the source separation should be performed, such as input features derived from the microphone signals). Furthermore, regarding the output, since a single target is defined based on the specified DOA range, the computational power of the DNN can be used more efficiently compared to a simultaneous estimation of many targets, out of which all except for a small subset representing the desired direction(s) would be discarded subsequently. This allows for saving resources and improved performance.

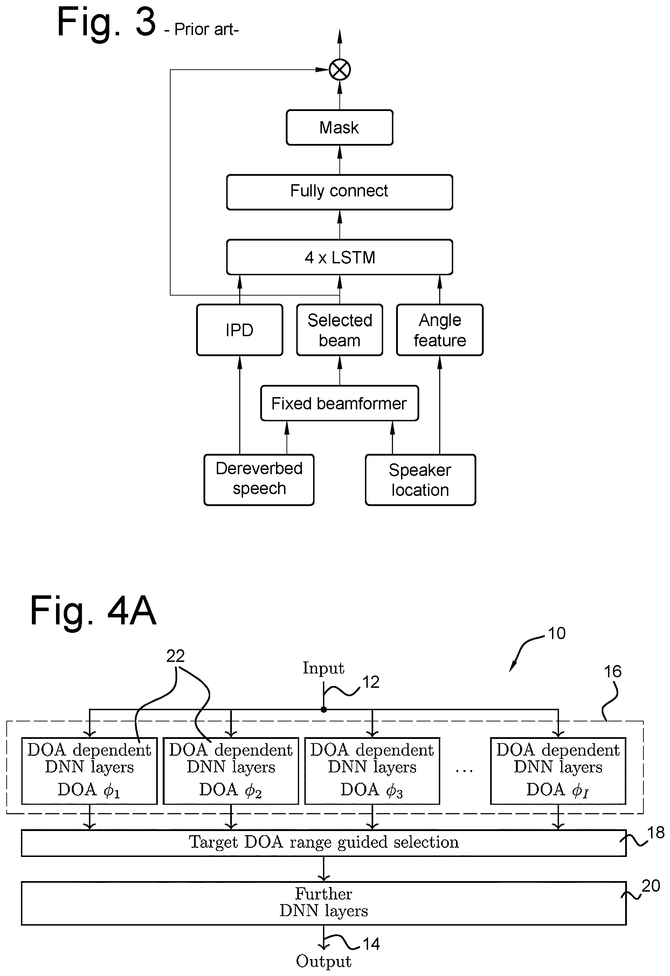

Fig. 4a schematically shows a DNN based signal processing system 10 according to embodiments of the present invention. The DNN based signal processing system 10 comprises an input 12, an output 14, a first DNN layer 16, a second DNN layer 18 and further processing DNN layers 20.

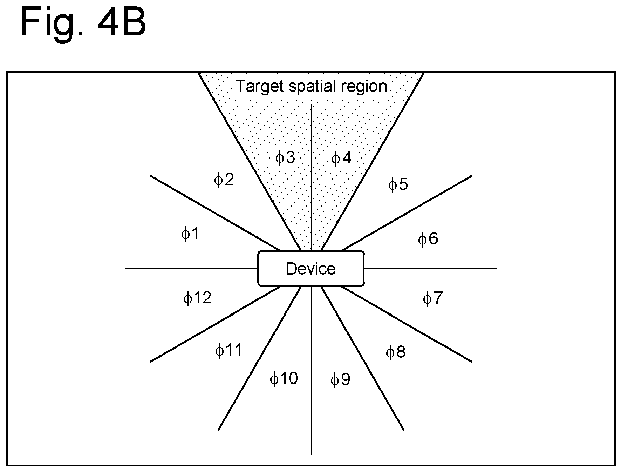

The first DNN layer 16 comprises a plurality of DOA dependent DNN layers 22 wherein each DOA dependent DNN layer 22 relates to a different DOA among $I$ discrete DOAs (i.e., $I$ is the number of different DOAs). The trainable parameters of the plurality of DOA dependent DNN layers 22 are specific to each of the $I$ discrete DOAs. Since the definition of the target depends on the selected DOA range, the DNN is expected to learn appropriate parameters for each DOA on its own during training. Fig. 4b shows an example of the $I$ discrete DOA regions and the target DOA range. In the example of fig. 4b, there are $I = 12$ DOA regions $\phi_1, \phi_2, ..., \phi_{12}$ covering a total of 360 degrees wherein each of the 12 DOA regions cover 30 degrees. the target DOA range in the example of fig. 4b consists of the range from -30 to 30 degrees. As explained, fig. 4b is an example and any other suitable number of DOA regions may be used arranged in any other suitable way. For instance, the grid may be finer such that each DOA region covers, for example, 5 or 10 degrees. The spatial region dependent DNN layers will be trained with sources from any position in the spatial regions.

The second DNN layer 18 comprises a target DOA range guided selection module configured to aggregate the DOA dependent features that correspond to the specified target DOA range in order to obtain a feature representation that no longer includes information from all DOAs. This can be achieved, e.g., by discarding features (i.e., multiplying them with 0) for the DOAs outside of the target DOA range among the $I$ DOAs, and subsequently taking the maximum (per feature) over the DOAs within the target DOA range among the $I$ DOAs.

In this way, the plurality of DOA dependent DNN layers 22 may receive a plurality of signals each one associated with a microphone signal comprising sound events generated by sound sources. The DOA dependent DNN layers 22 may extract a plurality of features from the plurality of signals. The second DNN layer 18 may receive the extracted plurality of features from the DOA dependent DNN layers 22 and generate another plurality of features based on said extracted plurality of features, where the another plurality of signals corresponds to corresponding to the at least one target spatial region. A weight is assigned to each of the extracted features and the another plurality of features are generated based on a weighted combination of the extracted plurality of features. Each weight may be a value between zero and one. In a further embodiment, each weight may be a zero or a one. In an embodiment, the another plurality of features may be generated by weighting the extracted plurality of features and taking the maximum of the weighted extracted features. In another embodiment, the weighted combination may be generated by calculating an average value among values of the extracted plurality of features. The further processing DNN layers 20 no longer need to perform DOA specific processing, since the first and the second DNN layers 16 and 18 have already made the distinction between the DOAs. The further processing DNN layers 20 may not be present in a further embodiment. The DNN based signal processing system 10 estimates a TF mask which is calculated based on the another plurality of features and detect or estimate a sound source located in the target DOA range using the estimated TF mask. Alternatively and not according to the invention, the DNN based signal processing system 10 may estimate a time domain representation of a sound source in the specified target DOA range and said time domain representation may be used to estimate or detect at least one target sound source. A time-frequency representation may be estimated based on said the another plurality of features and may be used to estimate or detect target sound sources. Beamforming weights may also be estimated such that the sound source is detected or estimated based on said beamformed weights.

An example implementation of an embodiment according to the invention will be explained now. Let $Y_{ref}(\mu, \lambda)$ and $S(\mu, \lambda)$ denote the reference microphone signal and the target signal, respectively, in the short-time Fourier transform (STFT) domain, where $\mu$ is the frequency index and $\lambda$ is the time frame index. Further, $\Phi_t$ is the set of target DOAs such that:

$$\Phi_t \subseteq \{\phi_1, \phi_2, ..., \phi_I\} \qquad (1)$$

And $\Phi_s$ is the set of (actual) source DOAs such that:

$$\Phi_s \subseteq \{\phi_1, \phi_2, ..., \phi_I\} \qquad (2)$$

wherein $\phi_1, \phi_2, ..., \phi_I$ are the different discrete DOAs wherein $I$ is the number of discrete DOAs and $\Phi_t$ and $\Phi_s$ are sets of discrete DOAs within the set $\phi_1, \phi_2, ..., \phi_I$. Then $\Phi_t \cap \Phi_s$ corresponds to the set of discrete DOAs comprising DOAs which belong at the same time to the set $\Phi_t$ and to the set $\Phi_s$ and represents the set of target source DOAs, whereas $\Phi_s \backslash (\Phi_t \cap \Phi_s)$ is the set of interfering source DOAs and corresponds to the set of discrete DOAs which comprising DOAs which are contained in the set $\phi_1, \phi_2, ..., \phi_I$ but not in the set of target source DOAs $\Phi_t \cap \Phi_s$.

The target output of the CNN of figure 1 comprises TF masks $\mathcal{M}_i(\mu, \lambda) \in [0,1]$ for all $i = 1, ..., I$. For all i where $\phi_i \notin \Phi_s$, the ideal TF masks are $\mathcal{M}_i(\mu, \lambda) = 0$. With the TF masks $\mathcal{M}_i(\mu, \lambda)$ for the target source directions (or estimates, $\widehat{\mathcal{M}}_i(\mu, \lambda)$, thereof), an estimate of the target signal is obtained as:

$$\hat{S}(\mu, \lambda) = \sum_{i:\phi_i \in \Phi_t \cap \Phi_s} \left( \mathcal{M}_i(\mu, \lambda) \cdot Y_{\text{ref}}(\mu, \lambda) \right). \qquad (3)$$

Therefore, although the CNN returns $I$ TF masks $\widehat{\mathcal{M}}_i(\mu, \lambda)$, $i = 1, ..., I$ in total, only the ones that correspond to one of the target source DOAs $\phi_i \in \Phi_t \cap \Phi_s$ are actually needed to obtain an estimate of the target signal.

To use the computational power of the CNN more efficiently, equation (3) can be rewritten as

$$\hat{S}(\mu, \lambda) = \mathcal{M}(\mu, \lambda) \cdot Y_{\text{ref}}(\mu, \lambda) \qquad (4)$$

with

$$\mathcal{M}(\mu, \lambda) = \sum_{i:\phi_i \in \Phi_t \cap \Phi_s} \mathcal{M}_i(\mu, \lambda). \qquad (5)$$

Thus, when $\Phi_t$ is specified beforehand, the target output reduces to a single TF mask $\mathcal{M}(\mu, \lambda)$.

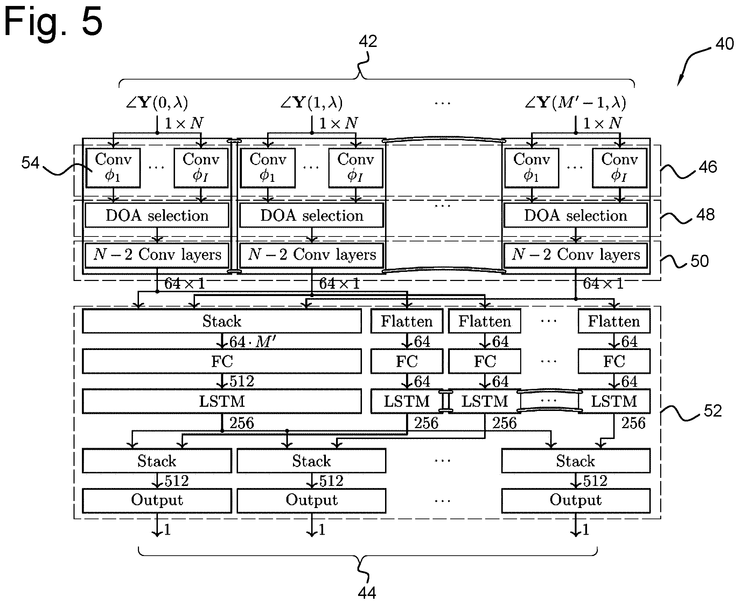

A specific non limiting embodiment of the invention, where the DOA dependent feature extraction is integrated into the TF mask estimator of figure 1 for this purpose, is presented in the following with respect to figure 5.

Instead of incorporating $\Phi_t$ in the input of the DNN, the parameters of the first layer are based on the DOA index $i = 1, ..., I$, thereby making the output features of this layer DOA dependent. Parameters (i.e., weights) of the DOA dependent layers are obtained by training these layers with sources coming from DOA index i. Subsequently, an aggregate of the features obtained for all target DOAs $\phi_i \in \Phi_t$ is used for further processing. The aggregate of the features is obtained by a weighted combination of extracted features. This weighted combination may be generated by, for instance, weighting the extracted features and taking the maximum of all the weighted extracted features. Furthermore, the weighted combination may be obtained by calculating the averaged value among all the weighted extracted features. Other suitable ways of aggregating the features may be used.

To integrate the DOA dependent feature extraction depicted in figure 4 into the CNN for TF mask estimation of figure 1, and thereby incorporate information about the target DOA range specified by $\Phi_t$, the DNN architecture of figure 1 is modified as illustrated below.

A DOA dependence is introduced in the first layer (the first of $N - 1$ convolutional layers in this case, where N is the number of microphones). Since this part of the DNN processes the subbands corresponding to each of the $M'$ discrete frequencies up to the Nyquist frequency independently, this is done for each $\mu = 0, ..., M' - 1$. After the DOA selection, the following layers (including the other $N - 2$ convolutional layers) can be similar to the ones in figure 1. More generally, DOA dependence could be incorporated in the first $L$ convolutional layers, so that only the remaining $N - L - 1$ convolutional layers are DOA independent. Furthermore, since only a single TF mask (instead of one TF mask for each one of the $I$ DOAs) is needed, the output size (for each frequency and frame) reduces from $I$ to 1.

Fig. 5 schematically shows a DNN based signal processing system 40 according to embodiments of the present invention. The DNN based signal processing system 40 comprises an input 42, an output 44, a DNN layer with DOA dependent parameters 46, a target DOA range guided selection layer 48, a further convolutional layer 50 and further processing DNN layers 52.

The DNN layer with DOA dependent parameters 46 comprises a set of convolutional layers 54 each one comprising 64 filters of length 2, which operate only over the channel dimension (i.e., in case of the very first layer, over the elements of the vectors of microphone signal phases $\angle Y(\mu, \lambda)$. Each convolutional layer 54 may comprise any suitable number of filters and each filter may have any suitable length. The input for each frequency is processed separately, but the filters are frequency independent (i.e., training may be performed jointly for all frequencies). In figure 5, this is indicated by means of horizontal connections ($\Longleftrightarrow$) between some blocks. By introducing DOA dependent parameters, the total number of filters per DOA dependent layer increases to $(64 \cdot I)$.

The target DOA range guided selection layer 48 receives the outputs of the DNN layers with DOA dependent parameters 46 and discards from said outputs those for which the DOA does not lie inside the specified target DOA range (i.e., those $\phi_i$ which are not part of the set of target DOAs $\Phi_t$. To do so, the part of said output signal corresponding to DOAs such that $\phi_i \in \Phi_t$ (i.e., the DOAs $\phi_i$ that belongs to the set of target DOAs $\Phi_t$) may be multiplied by 1, while the part of said output signal that corresponds to DOAs such that $\phi_i \notin \Phi_t$ (i.e., such that $\phi_i$ does not belong to the set of target DOAs $\Phi_t$) that may be multiplied by 0, thereby providing weighted DOA-dependent features. In this way, a weighted combination of the DOA-dependent features can be generated later. However, this may be performed in any other suitable way. In practice, the computation in the DNN layer with DOA dependent parameters 46 can be skipped entirely for the features corresponding to $\phi_i \notin \Phi_t$ since these are not needed anyway. Because all further processing in the DNN based signal processing system 40 is DOA independent, the DOA dimension is no longer needed subsequently and should therefore be reduced to size 1. For example, the maximum of the features corresponding to all (selected) DOAs is used for further processing.

The further convolutional layer 50 may be similar than the corresponding part of the first layer shown in fig. 1 wherein, out of the total of $(N - 1)$ convolutional layers of fig. 1, DOA dependent parameters are used only in the first one of those $(N - 1)$ convolutional layers such that the following $(N - 2)$ convolutional layers, as well as the remainder of the DNN, i.e., the further convolutional layer 50 and the further processing DNN layers 52, are independent of $\Phi_t$. These parts may therefore have a similar architecture as the ones in figure 1 (for example, comprising FC, flattening, stacking and LSTM layers). However, in figure 1, all DOA information is still contained in the processed data since TF masks are estimated for all DOAs simultaneously. Because this is not the case in fig. 4a, the computational power of the DNN is used more efficiently.

The DOA dependence is enabled by the training data, which consist of pairs of target DOA range $\Phi_t$ and target output $\mathcal{M}(\mu, \lambda)$. For an otherwise unchanged scenario (i.e., the same signal mixture at the microphones), the target output can vary depending on which source DOAs fall inside the target DOA range.

The invention is not restricted to the phase inputs illustrated in figure 5. In addition to (or instead of) the phases of time-frequency representations of microphone signals, the complex-valued time-frequency representations and/or the normalized amplitudes of the time-frequency representations may be used as input in figures 4 and 5. The normalization of the amplitude time-frequency representations can be based on a norm (for example, 1-norm or 2-norm) of the time-frequency representations of all or a subset $\Delta$ of microphone signals, as shown in equation (6):

$$|Y(\mu, \lambda)|_{norm} = \frac{|Y(\mu, \lambda)|}{\left\|\left(Y(i, \lambda), \ldots, Y(j, \lambda)\right)\right\|_{i, \ldots j \in \Delta}}, \qquad (6)$$

The invention is not restricted to the architecture illustrated in figure 5 into which the invention has been integrated as explained. Rather, in accordance with the generic block diagram depicted in figure 4, it can be integrated equally well into any other DNN topology, e.g., an encoder/decoder based neural network (i.e., DOA specific encoder layers). Furthermore, the further processing DNN layers 52 may not be present. In further embodiments, instead of estimating a target output TF mask, other estimations are possible such as a complex TF mask, time-domain or time-frequency representations of the target signals, or beamformer coefficients.

Some variations for alternative embodiments will be listed in the following and are also not specific to any particular DNN architecture but maybe used in any suitable DNN.

When integrating the DNN layer with DOA dependent parameters 46 in the first layers of the DNN based signal processing system 40, the increase in the number of trainable parameters is smallest. This is because the input consists of a single vector of length N for each frequency and frame, whereas the input and output of the subsequent convolutional layers consist of as many vectors as there are filters (64 in figure 5). For a different architecture, it may be preferred to integrate the DNN layer with DOA dependent parameters 46 into a different layer of the DNN based signal processing system.

The purpose of the invention is to eliminate the DOA dependence of the data early in the chain, such that all further processing can be done irrespective of the target DOAs. By doing so based on the input directly, the remaining layers can work with a DOA independent representation based on which the computational power can be used more efficiently (and can even permit the use of transfer learning or other efficient learning methodologies). In contrast, in the prior art as shown in figure 1, the DOA information for all I DOAs is still contained in the data until the ultimate estimation of the masks for all *I* DOAs. Since only a small subset of these masks are actually needed, there is a considerable redundancy in the processed data and therefore computational resources are not efficiently used.

Nevertheless, it is also possible to integrate the DOA dependent processing into the DNN in a different form. For example, the invention can be integrated in a deeper level of the network (e.g., the fully-connected (FC) layer in figure 5), where a higher degree of abstraction is already achieved.

The target DOA range guided selection layer 48 of figure 5 performs DOA selection by generating a weighted combination of the extracted features, for instance, by taking the maximum of the weighted DOA-dependent features $\mathrm{I}(\mu, \lambda, \phi_i)$ across all look directions and this can be expressed as

$$\mathrm{O}(\mu, \lambda) = \max_{1 \leq i \leq I} \big( w(\phi_i) \cdot \mathrm{I}(\mu, \lambda, \phi_i) \big), \tag{7}$$

where $\mathrm{I}(\mu, \lambda, \phi_i)$ is the matrix input received at the target DOA range guided selection layer 48 and is also the output of the DNN layer with DOA dependent parameters 46, $\max(\cdot)$ is an operation function which output is the maximum of its input and is applied elementwise, and the weights $w(\phi_i)$ assigned to each extracted feature are given by

$$w(\phi_i) = \begin{cases} 1, \phi_i \in \Phi_t \\ 0, \phi_i \notin \Phi_t. \end{cases} \tag{8}$$

The intuition behind taking the maximum for all DOAs $\phi_i \in \Phi_t$ is that source activity for any of the directions included in $\Phi_t$ should be captured, regardless of the number of elements in $\Phi_t$. However, other solutions are possible and some non-limiting alternatives are explained in the following.

The target output shown above in equation (5) is the sum of all individual TF masks. Therefore, for generating the weighted combination of the extracted features, a summation or averaging of the weighted extracted features over all DOAs may be considered instead of taking the maximum. A generalization of equation (7) is given by

$$\mathrm{O}(\mu, \lambda) = \mathop{\mathrm{op}}_{1 \leq i \leq I} \big( w(\phi_i) \cdot \mathrm{I}(\mu, \lambda, \phi_i) \big) \tag{9}$$

where $\mathrm{op}(\cdot)$ is some operation such as for instance a sum operation or an average operation.

Instead of the binary-valued $w(\phi_i)$, a real-valued weighting can be employed. For example, when $\Phi_t$ covers a coherent range of DOAs, the weight can be set to the maximum $w(\phi_i) = 1$ in the center, and decreased monotonically towards the end of the target DOA range in order to realize a smooth transition. Alternatively, soft information about source activity per DOA, e.g., obtained from a separate system (e.g., neural network), can directly be used to set the weights.

Finally, for the special case where $\Phi_t$ is constrained such that $|\Phi_t| = 1$ (where $|\mathcal{S}|$ denotes the number of elements in the set $\mathcal{S}$), given the information extracted from the microphone signals and one particular target source DOA, the appropriate TF mask is returned. In this form, a direct comparison is, therefore, possible. Because TF masks are computed for each DOA separately, the computational power of the neural network is used more efficiently when the invention is used compared to a simultaneous estimation of masks for all directions.

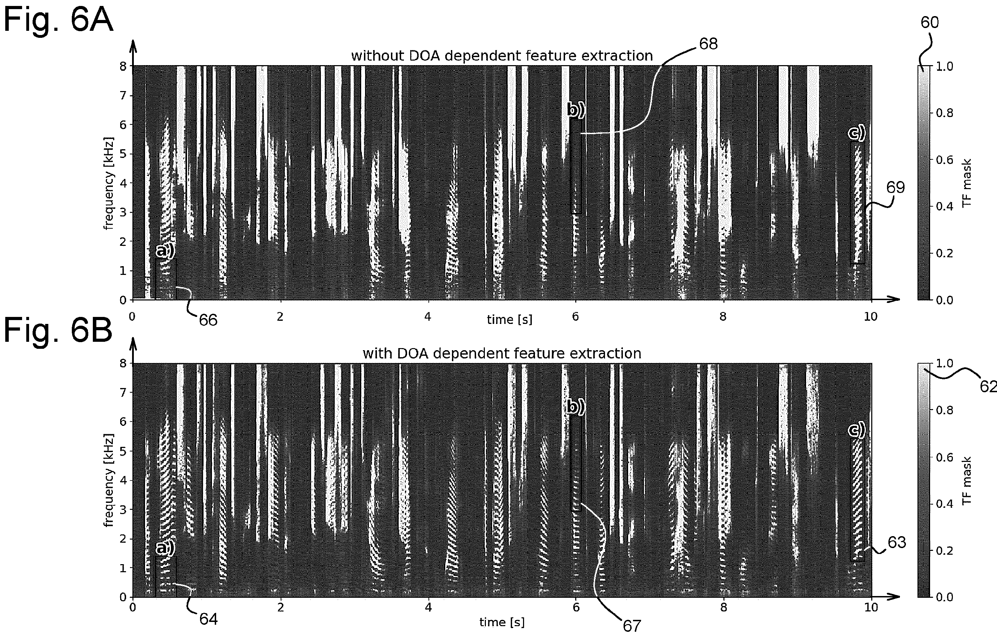

Figure 6A shows simulation results wherein a DNN similar to that of figure 1 was used to estimate TF masks for all directions simultaneously. Figure 6B shows simulation results wherein a DNN according to an embodiment of the invention was used to estimate a TF mask for a target DOA range covering a width of 15° in terms of the azimuth angle. The test scenario for both simulations in figures 6A-B consists of two concurrent talkers (with a difference of 60° in terms of the underlying azimuth angles of arrival) in the presence of additive noise (SNR = 5 dB). One of the speech signals serves at the target, whereas the interfering speaker and noise should be suppressed. In both figures 6A-B, the horizontal axis represents time in seconds while the vertical axis represents frequency in kilohertz's. The bars 60 and 62 represent the TF masks color legend wherein the TF masks can have values between 0 and 1 and each value is associated to a color as shown in bars 60 and 62 . Clearly, the DOA dependent feature extraction used in the simulation shown in figure 6B permits capturing the harmonic structure of speech more accurately. Specifically, the following key improvements are observed, for which some exemplary segments are also marked in the figures 6A-B:

Improved separation at low frequencies: differences between the signal components in terms of spatial information (which the TF mask estimation is based on exclusively here) are minor at low frequencies, which makes their separation difficult. With the DOA dependent feature extraction, a distinct structure is still visible further into the low frequencies in figure 6B, as indicated in 64, while the TF mask in figure 6A is already blurred, as indicated in 66.

Larger proportion of target speech is preserved: also at higher frequencies, it becomes apparent that the DNN with the DOA dependent feature extraction makes better use of limited information. In this case, the signal is suppressed entirely towards higher frequencies in figure 6A (TF mask close to 0 everywhere) as indicated by 68, whereas the mask in the method used in figure 6B suppresses only part of the signal, as indicated by 67.

Fine structure captured more accurately: the background noise is broadband, whereas the target speech is relatively sparse. Therefore, to ensure that the noise is suppressed also in TF regions with significant speech activity, it is crucial that there is also a considerable suppression between individual harmonics. In figure 6A, the harmonics appear blurred, as indicated in 69. The resulting insufficient suppression between the harmonics can give rise to a perceived target speech distortion. With the DOA dependent feature extraction, in contrast, more distinct harmonics can be seen in the mask, which reduce the perceived target speech distortion considerably (see 63 in figure 6B).

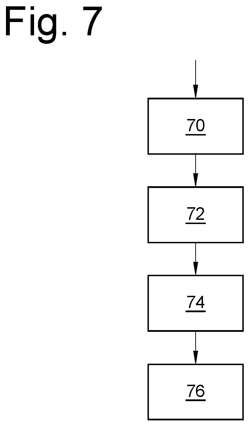

Fig. 7 shows a flow chart of a method for detecting or estimating target sound sources among a plurality of sound sources wherein the target sound sources are located in at least one target spatial region among a plurality of spatial regions.

In step 70, the method comprises receiving, by a processor, a plurality of signals wherein each of the plurality of signals is associated with one of a plurality of microphone signals wherein the microphone signals comprise sound events generated by the plurality of sound sources.

In step 72, the method comprises extracting, by the processor via a neural network, a plurality of features, wherein the plurality of features is extracted from the plurality of signals and wherein each of the plurality of features has been obtained by training the neural network for a different spatial region among the plurality of spatial regions.

In step 74, the method comprises generating, by the processor, another plurality of features based on the extracted plurality of features wherein the another plurality of features corresponds to the at least one target spatial region;

Finally, in step 76, the method comprises detecting or estimating, by the processor, at least one sound source among the target sound sources in the at least one target spatial region based on the another plurality of features corresponding to the at least one target spatial region.

While the invention has been described with reference to exemplary embodiments, it will be understood by those skilled in the art that various changes may be made without departing from the scope of the invention. In addition, many modifications may be made to adapt a particular situation or material to the teachings of the invention without departing from the scope thereof. Therefore, it is intended that the invention not be limited to the particular embodiments disclosed, but that the invention will include all embodiments falling within the scope of the appended claims.

In particular, combinations of specific features of various aspects of the invention may be made. It is to be understood that the invention is limited by the annexed claims. In this document and in its claims, the verb "to comprise" and its conjugations are used in their non-limiting sense to mean that items following the word are included, without excluding items not specifically mentioned. In addition, 10 reference to an element by the indefinite article "a" or "an" does not exclude the possibility that more than one of the element is present, unless the context clearly requires that there be one and only one of the elements. The indefinite article "a" or "an" thus usually means "at least one"

**Claims**

1. A method for detecting or estimating target sound sources among a plurality of sound sources wherein the target sound sources are located in at least one target spatial region among a plurality of spatial regions, the method comprising:

   receiving, by a processor, a plurality of signals wherein each of the plurality of signals is associated with one of a plurality of microphone signals wherein the microphone signals comprise sound events generated by the plurality of sound sources;
   extracting, by the processor via a neural network, a plurality of features, wherein the plurality of features is extracted from the plurality of signals and wherein each of the plurality of features has been obtained by training the neural network for a different spatial region among the plurality of spatial regions;
   aggregating target features from the extracted plurality of features, wherein the target features correspond to the at least one target spatial region;

generating, by the processor, another plurality of features based on the aggregated target features, wherein the another plurality of features is generated by a weighted combination of the aggregated target features;

generating a time-frequency (TF) mask based on the another plurality of features;

detecting or estimating, by the processor, at least one sound source among the target sound sources in the target spatial region based on the TF mask.

2. The method according to Claim 1, wherein each of the plurality of signals is associated with a plurality of phases of time-frequency representations of microphone time-domain signals.

3. The method according to any of Claim 1 and Claim 2, wherein each of the plurality of signals comprises at least one of a plurality of normalized amplitudes of time-frequency representations of microphone time-domain signals wherein the normalization is based on a norm of at least one of a plurality of time-frequency representations of microphone time-domain signals.

4. The method according to Claim 1, wherein each of the plurality of signals is associated with a plurality of complex time-frequency representations of microphone time-domain signals.

5. The method according to any of claims 1-4, wherein the plurality of features are extracted from the plurality of signals by means of at least one of a plurality of convolutional neural network layers.

6. The method according to any of Claim 1-5, wherein each of the plurality of spatial regions comprises a plurality of direction of arrivals.

7. The method according to any of Claims 1-6 further comprising estimating, by the processor, a time domain representation of the at least one sound source based on the another plurality of features and to detect or estimate the at least one sound source based on the time domain representation.

8. The method according to any of Claims 1-6 further comprising estimating, by the processor, a time-frequency representation of the at least one sound source based on the another plurality of features and to detect or estimate the at least one sound source based on the time-frequency representation.

9. The method according to any of Claims 1-6 further comprising estimating, by the processor, beamforming weights based on the another plurality of features and to detect or estimate the at least one sound source based on the beamforming weights.

10. The method according to Claim 1, wherein generating the weighted combination of the target features comprises generating a weight value for each one of the extracted plurality of features wherein the weight value for a feature among the extracted plurality of features represents whether said feature corresponds to the target spatial region.

11. The method any of the preceding Claims, wherein the another plurality of features is generated by weighting the target features and taking the maximum of the weighted target features.

12. An apparatus for detecting or estimating target sound sources among a plurality of sound sources wherein the target sound sources are located in at least one target spatial region among a plurality of spatial regions, the apparatus comprising a memory and a processor communicatively connected to the memory and configured to execute instructions to perform the method according to any of Claims 1 to 11.

13. Computer program which is arranged to perform the method according to one of Claims 1 to 11.

**Patentansprüche**

1. Verfahren zum Erkennen oder Schätzen von Zielschallquellen aus einer Vielzahl von Schallquellen, wobei sich die Zielschallquellen in mindestens einem räumlichen Zielbereich aus einer Vielzahl von räumlichen Bereichen befinden, wobei das Verfahren Folgendes umfasst:

Empfangen einer Vielzahl von Signalen durch einen Prozessor, wobei jedes der Vielzahl von Signalen mit einem einer Vielzahl von Mikrofonsignalen assoziiert ist, wobei die Mikrofonsignale von der Vielzahl von Schallquellen erzeugte Schallereignisse umfassen;

Extrahieren einer Vielzahl von Merkmalen durch den Prozessor über ein neuronales Netzwerk, wobei die Vielzahl von Merkmalen aus der Vielzahl von Signalen extrahiert wird und wobei jedes der Vielzahl von Merkmalen durch Trainieren des neuronalen Netzwerks für einen anderen räumlichen Bereich aus der Vielzahl von räumlichen Bereichen erhalten wurde;

Aggregieren von Zielmerkmalen aus der extrahierten Vielzahl von Merkmalen, wobei die Zielmerkmale dem mindestens einen räumlichen Zielbereich entsprechen;

Erzeugen einer weiteren Vielzahl von Merkmalen basierend auf den aggregierten Zielmerkmalen durch den Prozessor, wobei die weitere Vielzahl von Merkmalen durch eine gewichtete Kombination der aggregierten Zielmerkmale erzeugt wird;

Erzeugen einer Zeitfrequenz(TF)-Maske basierend auf der weiteren Vielzahl von Merkmalen;

Erkennen oder Schätzen mindestens einer Schallquelle aus den Zielschallquellen in dem räumlichen Zielbereich basierend auf der TF-Maske durch den Prozessor.

2. Verfahren nach Anspruch 1, wobei jedes der Vielzahl von Signalen mit einer Vielzahl von Phasen von Zeitfrequenzdarstellungen von Mikrofon-Zeitbereichssignalen assoziiert ist.

3. Verfahren nach einem der Ansprüche 1 und 2, wobei jedes der Vielzahl von Signalen mindesten eine einer Vielzahl von normalisierten Amplituden von Zeitfrequenzdarstellungen von Mikrofon-Zeitbereichssignalen umfasst, wobei die Normalisierung auf einer Norm von mindestens einer einer Vielzahl von Zeitfrequenzdarstellungen von Mikrofon-Zeitbereichssignalen basiert.

4. Verfahren nach Anspruch 1, wobei jedes der Vielzahl von Signalen mit einer Vielzahl von komplexen Zeitfrequenzdarstellungen von Mikrofon-Zeitbereichssignalen assoziiert ist.

5. Verfahren nach einem der Ansprüche 1-4, wobei die Vielzahl von Merkmalen aus der Vielzahl von Signalen mittels mindestens einer einer Vielzahl von Schichten des neuronalen Faltungsnetzwerks extrahiert werden.

6. Verfahren nach einem der Ansprüche 1-5, wobei jeder der Vielzahl von räumlichen Bereichen eine Vielzahl von Ankunftsrichtungen umfasst.

7. Verfahren nach einem der Ansprüche 1-6, das ferner das Schätzen einer Zeitbereichsdarstellung der mindestens einen Schallquelle basierend auf der weiteren Vielzahl von Merkmalen und das Erkennen oder Schätzen der mindestens einen Schallquelle basierend auf der Zeitbereichsdarstellung durch den Prozessor umfasst.

8. Verfahren nach einem der Ansprüche 1-6, das ferner das Schätzen einer Zeitfrequenzdarstellung der mindestens einen Schallquelle basierend auf der weiteren Vielzahl von Merkmalen und das Erkennen oder Schätzen der mindestens einen Schallquelle basierend auf der Zeitfrequenzdarstellung durch den Prozessor umfasst.

9. Verfahren nach einem der Ansprüche 1-6, das ferner das Schätzen von Strahlformungsgewichten basierend auf der weiteren Vielzahl von Merkmalen und das Erkennen oder Schätzen der mindestens einen Schallquelle basierend auf den Strahlformungsgewichten durch den Prozessor umfasst.

10. Verfahren nach Anspruch 1, wobei das Erzeugen der gewichteten Kombination der Zielmerkmale das Erzeugen eines Gewichtungswerts für jedes der extrahierten Vielzahl von Merkmalen umfasst, wobei der Gewichtungswert für ein Merkmal aus der extrahierten Vielzahl von Merkmalen darstellt, ob das besagte Merkmal dem räumlichen Zielbereich entspricht.

11. Verfahren nach einem der vorhergehenden Ansprüche, wobei die weitere Vielzahl von Merkmalen durch Gewichten der Zielmerkmale und Auswählen des Maximums der gewichteten Zielmerkmale erzeugt wird.

12. Vorrichtung zum Erkennen oder Schätzen von Zielschallquellen aus einer Vielzahl von Schallquellen, wobei sich die Zielschallquellen in mindestens einem räumlichen Zielbereich aus einer Vielzahl von räumlichen Bereichen befinden, wobei die Vorrichtung einen Speicher und einen Prozessor umfasst, der mit dem Speicher kommunikativ verbunden und so konfiguriert ist, dass er Anweisungen ausführt, um das Verfahren nach einem der Ansprüche 1 bis 11 auszuführen.

13. Computerprogramm, das zum Ausführen des Verfahrens nach einem der Ansprüche 1 bis 11 eingerichtet ist.

# EP 4 171 064 B1

**Revendications**

1. Procédé pour détecter ou estimer des sources sonores cibles parmi une pluralité de sources sonores, où les sources sonores cibles sont situées dans au moins une région spatiale cible parmi une pluralité de régions spatiales, le procédé comprenant :

   la réception, par un processeur, d'une pluralité de signaux, où chacun de la pluralité de signaux est associé à l'un d'une pluralité de signaux de microphone, où les signaux de microphone comprennent des événements sonores générés par la pluralité de sources sonores ;

   l'extraction, par le processeur via un réseau neuronal, d'une pluralité de caractéristiques, où la pluralité de caractéristiques est extraite de la pluralité de signaux et où chacune de la pluralité de caractéristiques a été obtenue en entraînant le réseau neuronal pour une région spatiale différente parmi la pluralité de régions spatiales ;

   l'agrégation de caractéristiques cibles à partir de la pluralité de caractéristiques extraite, où les caractéristiques cibles correspondent à l'au moins une région spatiale cible ;

   la génération, par le processeur, d'une autre pluralité de caractéristiques sur la base des caractéristiques cibles agrégées, où l'autre pluralité de caractéristiques est générée par une combinaison pondérée des caractéristiques cibles agrégées ;

   la génération d'un masque temps-fréquence (TF) sur la base de l'autre pluralité de caractéristiques ;

   la détection ou l'estimation, par le processeur, d'au moins une source sonore parmi les sources sonores cibles dans la région spatiale cible sur la base du masque TF.

2. Procédé selon la revendication 1, où chacun de la pluralité de signaux est associé à une pluralité de phases de représentations temps-fréquence de signaux de domaine temporel de microphone.

3. Procédé selon l'une quelconque des revendications 1 et 2, où chacun de la pluralité de signaux comprend au moins l'une d'une pluralité d'amplitudes normalisées de représentations temps-fréquence de signaux de domaine temporel de microphone, où la normalisation est basée sur une norme d'au moins l'une d'une pluralité de représentations temps-fréquence de signaux de domaine temporel de microphone.

4. Procédé selon la revendication 1, où chacun de la pluralité de signaux est associé à une pluralité de représentations temps-fréquence complexes de signaux de domaine temporel de microphone.

5. Procédé selon l'une quelconque des revendications 1 à 4, où la pluralité de caractéristiques est extraite de la pluralité de signaux au moyen d'au moins l'une parmi une pluralité de couches de réseau neuronal convolutif.

6. Procédé selon l'une quelconque des revendications 1 à 5, où chacune de la pluralité de régions spatiales comprend une pluralité de directions d'arrivée.

7. Procédé selon l'une quelconque des revendications 1 à 6, comprenant en outre l'estimation, par le processeur, d'une représentation de domaine temporel de l'au moins une source sonore sur la base de l'autre pluralité de caractéristiques et la détection ou l'estimation de l'au moins une source sonore sur la base de la représentation de domaine temporel.

8. Procédé selon l'une quelconque des revendications 1 à 6, comprenant en outre l'estimation, par le processeur, d'une représentation temps-fréquence de l'au moins une source sonore sur la base de l'autre pluralité de caractéristiques et la détection ou l'estimation de l'au moins une source sonore sur la base de la représentation temps-fréquence.

9. Procédé selon l'une quelconque des revendications 1 à 6, comprenant en outre l'estimation, par le processeur, de poids de formation de faisceaux sur la base de l'autre pluralité de caractéristiques et la détection ou l'estimation de l'au moins une source sonore sur la base des poids de formation de faisceaux.

10. Procédé selon la revendication 1, où la génération de la combinaison pondérée des caractéristiques cibles comprend la génération d'une valeur de pondération pour chacune de la pluralité de caractéristiques extraite, où la valeur de pondération d'une caractéristique parmi la pluralité de caractéristiques extraite représente si ladite caractéristique correspond à la région spatiale cible.

11. Procédé selon l'une quelconque des revendications précédentes, où l'autre pluralité de caractéristiques est générée en pondérant les caractéristiques cibles et en prenant le maximum des caractéristiques cibles pondérées.

12. Appareil pour détecter ou estimer des sources sonores cibles parmi une pluralité de sources sonores, où les sources sonores cibles sont situées dans au moins une région spatiale cible parmi une pluralité de régions spatiales, l'appareil comprenant une mémoire et un processeur connecté de manière communicative à la mémoire et configuré pour exécuter des instructions afin d'effectuer le procédé selon l'une quelconque des revendications 1 à 11.

13. Programme informatique qui est configuré pour effectuer le procédé selon l'une quelconque des revendications 1 à 11.

# Fig. 1 - Prior art-

$\angle\mathbf{Y}(0,\lambda)$         $\angle\mathbf{Y}(1,\lambda)$       $\cdots$       $\angle\mathbf{Y}(M'-1,\lambda)$

$\downarrow 1\times N$        $\downarrow 1\times N$        $\downarrow 1\times N$

| $N-1$ Conv layers $\updownarrow$ | $N-1$ Conv layers | $\cdots$ | $N-1$ Conv layers |

$\downarrow 64\times 1$       $\downarrow 64\times 1$       $\downarrow 64\times 1$

| Stack | | | Flatten | Flatten | $\cdots$ | Flatten |

$\downarrow 64\cdot M'$     $\downarrow 64$    $\downarrow 64$     $\downarrow 64$

| FC | | | FC | FC | $\cdots$ | FC |

$\downarrow 512$     $\downarrow 64$    $\downarrow 64$     $\downarrow 64$

| LSTM | | | LSTM $\updownarrow$ | LSTM | $\cdots$ | LSTM |

$\downarrow 256$     $256$    $256$     $256$

| Stack | Stack | $\cdots$ | Stack |

$\downarrow 512$     $\downarrow 512$     $\downarrow 512$

| Output | Output | $\cdots$ | Output |

$\downarrow I$     $\downarrow I$     $\downarrow I$

# Fig. 2 - Prior art-

# Fig. 3 - Prior art-

# Fig. 4A

# Fig. 4B

# Fig. 5

Fig. 6A

Fig. 6B

# Fig. 7

```
        │
        ▼
   ┌─────────┐
   │   70    │
   └─────────┘
        │
        ▼
   ┌─────────┐
   │   72    │
   └─────────┘
        │
        ▼
   ┌─────────┐
   │   74    │
   └─────────┘
        │
        ▼
   ┌─────────┐
   │   76    │
   └─────────┘
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. CHAKRABARTY** ; **E. A. P. HABETS**. Time-Frequency Masking Based Online Multi-Channel Speech Enhancement with Convolutional Recurrent Neural Networks. *IEEE Journal of Selected Topics in Signal Processing*, August 2019, vol. 13 (4), 787-799
- **L. PFEIFENBERGER** ; **M. ZÖHRER** ; **F. PERNKOPF**. Eigenvector-Based Speech Mask Estimation for Multi-Channel Speech Enhancement. *IEEE/ACM Transactions on Audio, Speech, and Language Processing*, December 2019, vol. 27 (12), 2162-2172

- **P. PERTILÄ** ; **J. NIKUNEN**. Distant speech separation using predicted time-frequency masks from spatial features. *Speech Communication*, 2015, vol. 68, 97-106
- **Z. CHEN** ; **X. XIAO** ; **T. YOSHIOKA** ; **H. ERDOGAN** ; **J. LI** ; **Y. GONG**. Multi-Channel Overlapped Speech Recognition with Location Guided Speech Extraction Network. *2018 IEEE Spoken Language Technology Workshop (SLT)*, 2018, 558-565
- **R. GU** ; **Y. ZOU**. Temporal-Spatial Neural Filter: Direction Informed End-to-End Multi-channel Target Speech Separation. *arXiv preprint arXiv:2001.00391*, 2020